# EUROPEAN PATENT SPECIFICATION

(11) **EP 3 410 615 B1**
(45) Date of publication and mention of the grant of the patent: **04.05.2022**
(21) Application number: 17174290.1
(22) Date of filing: 02.06.2017
(51) Int. Cl.: H04B 10/032, H04B 10/077, H04B 10/079, H04J 14/02, H04B 10/272, H04J 3/06

(54) **AN EQUALIZATION DELAY ADJUSTMENT DEVICE AND METHOD FOR PROTECTED OPTICAL NETWORK UNITS**
ENTZERRUNGSVERZÖGERUNGSEINSTELLUNGSVORRICHTUNG UND VERFAHREN FÜR GESCHÜTZTE OPTISCHE NETZWERKEINHEITEN
DISPOSITIF DE RÉGLAGE DE RETARD D'ÉGALISATION ET PROCÉDÉ POUR PROTÉGER DES UNITÉS DE RÉSEAU OPTIQUE

(43) Date of publication of application: 05.12.2018
(73) Proprietor: Nokia Technologies Oy, 02610 Espoo (FI)
(72) Inventor: Sillis, Yannick, 2018 Antwerp (BE); Thomas, David, 2018 Antwerp (BE)
(74) Representative: IP HILLS NV

(56) References cited:
- US-A1- 2002 114 028
- US-A1- 2010 085 990
- US-A1- 2014 161 436

## Description

### Technical Field

The present invention generally relates to adjustment of the equalization delay for optical network units after Type-B protection switching, i.e. an event wherein the optical network units coupled to a first optical line termination are switched to be coupled to a second optical line termination. The protecting optical fibers that couple the optical network units to the second optical line termination differ from the protected optical fibers that couple the optical network units to the first optical line termination and follow separate geographical paths. Consequently, the respective equalization delays that compensate for the difference in distance from the optical line termination to the respective optical network units must be adjusted depending on which path is active.

### Background

In a passive optical network, abbreviated PON, a plurality of optical network units, abbreviated ONUs, is coupled to a single optical line termination, abbreviated OLT. The ONUs reside at the customer premises whereas the OLT is located at the central office. The optical fibers that couple the OLT to the plurality of ONUs typically comprise a so-called feeder fiber extending from the OLT up to a passive optical splitter, and individual optical fibers from the passive optical splitter up to the respective ONUs. Obviously, more complex architectures exist with multiple stages of passive optical splitters respectively serving subsets of ONUs.

Type-B protection switching is a protection scheme wherein the feeder fiber section is protected by another feeder fiber which generally follows a separate geographical path. The fiber length of the protected feeder fiber and the protecting feeder fiber generally differ. The difference in length between the protected feeder fiber and the protecting feeder fiber may be in the range of several kilometers: a 5 km feeder fiber between an OLT and an optical splitter may for instance be protected through a 20 km feeder fiber between the same OLT and optical splitter.

At the Transmission Convergence layer, abbreviated TC-layer, the difference in length between the protected optical fibers and the protecting optical fibers translates into a different round trip time or RTT for each ONU's optical signal transported over the PON. The equalization delays applied by the different ONUs to compensate for the differences in RTT between the different ONUs consequently must be adjusted when the RTTs of the ONUs are altered as a result of Type-B protection switch event wherein the ONUs are switched from a first, active OLT to a second, standby OLT in the central office. The adjustment of the equalization delays must be performed as fast as possible to minimize loss of service after such a Type-B protection switching event.

A straightforward solution to determine the equalization delays that the ONUs must apply after a Type-B protection switching consists in a full-reactivation and recalibration of the PON. Re-activating and re-calibrating the PON however is timeconsuming and service-impacting.

ITU-T Standard Specification G.987.3, also known as XG-PON or 10 Gigabit capable PON, suggests in paragraph 12.2.2.e to statically equalize the fiber distance between the active, protected path and the passive, protecting path by inserting an optical fiber spool in the shorter one of these paths. The optical fiber spool must have a length equal to the difference in length between the protected fiber and protecting fiber, e.g. 15 km in the above example of a 5 km protected feeder fiber and a 20 km protecting feeder fiber. The method relying on an optical fiber spool is rather inaccurate because the fiber length difference typically has a magnitude in the range of kilometers whereas the fiber length equalization must reach a precision in the order of meters to avoid interference between upstream transmissions of several ONUs.

ITU-T Standard Specification G.sup51 provides four alternative solutions to the problem of equalization delay adjustment after switching from an active, protected fiber path to a standby, protecting fiber path in a PON. Each of these solutions is disadvantageous, as will be explained in the following paragraphs.

Section 8.1 of ITU-T G.sup51 describes a pre-ranging procedure for an ONU on the protecting path without affecting the protected path. This pre-ranging procedure is disadvantageous because it requires upfront action, the timestamps used by the protected OLT and the protecting OLT need to be synchronised with nanosecond precision, and the pre-ranging process needs to be re-executed each time the backup, protecting path is altered, even when altered by less than a few meters.

Section 8.2 of ITU-T G.sup51 describes the so-called POPUP method for delay equalization after a protection switching event. Application of the POPUP method however is restricted to GPON, i.e. Gigabit PONs operating in accordance with ITU-T Standard Specification G.984.3. It is not applicable to other flavours of Next Generation PONs such as XG-PON1 or 10 Gigabit capable PON, XGS-PON or 10 Gigabit capable symmetrical PON, NG-PON2 that uses time- and wavelength division multiplexing, etc.

Section 8.3 of ITU-T G.sup51 describes a technique for delay equalization after a protection switching event that requires all ONUs to range sequentially. The technique is service intrusive, time consuming and often cannot be completed within the maximum outage time defined for a Type-B protection switchover.

Section 8.4 of ITU-T G.sup51 describes a method for delay equalization after a Type-B protection switching event that does not require the ONUs to adjust their respective equalization delays but which instead relies on changing the zero-distance equalization delay of the backup OLT. The method requires upfront synchronisation of the delay caused by the fiber length between the primary OLT and the backup OLT. Thereto, the upstream PHY frame offset is upfront synchronised. The method is disadvantageous because the activation of a new ONU on the backup OLT is impossible until its perceived PHY frame offset is adjusted to the physical characteristics of the backup feeder fiber.

Also ITU-T Standard Specification G.989.3, known as NG-PON2, describes three alternative methods to deal with the problem of equalization delay adjustment after a protection switching event in a time- and wavelength division multiplexing passive optical network or TWDM-PON.

In Appendix VII of ITU-T G.989.3, sections VII.2 and VII.3 describe techniques that use a pilot ONU re-tuning from channel to channel. These techniques impact the service on the entire PON as the equalization delay difference must be calculated prior to switchover. Moreover, the procedure has to be re-executed each time the backup path is altered, even by a few meters. These techniques are further restricted in use to multi-wavelength systems and therefore cannot be extended to other PON flavours like XG-PON and XGS-PON.

Section VI1.1 of ITU-T G.989.3 Appendix VII describes an alternative method for equalization delay adjustment after a protection switching event that can be applied in alternative PON flavours like XG-PON and XGS-PON, but the proposed method has scalability problems when multiple ONUs are involved.

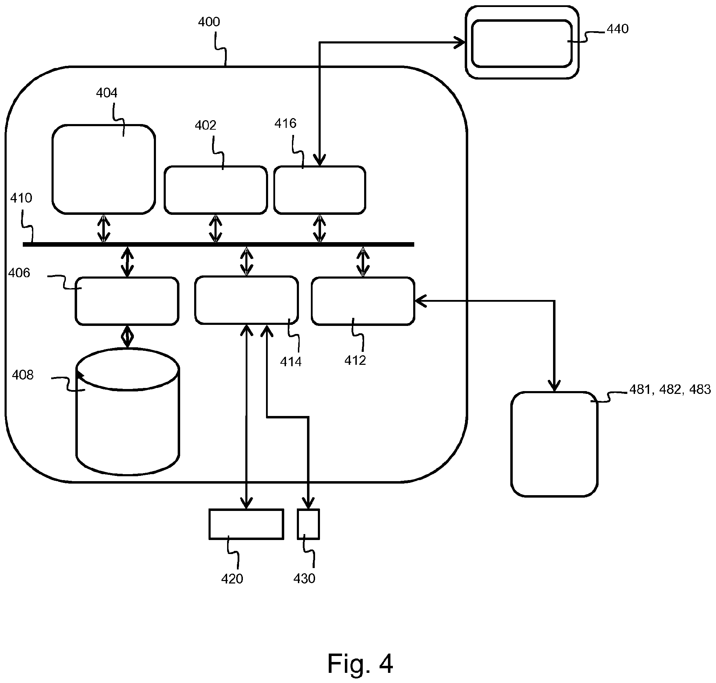

United States Patent Application US 2002/0114028 A1 entitled "Health Check Algorithm for Protection Circuit in Optical Network" describes a procedure to determine the equalization delay difference between a protected OLT (404 in Fig. 4) and a protecting OLT (406 in Fig. 4). Therein, the difference in equalisation delay between a protected OLT and a protecting OLT is determined (par. [0089]). RTT measurements are used thereto (par. [0090]). The difference is averaged across the ONTs (par. [0092]), and the average value is communicated to and used by all ONTs when switching from the protected OLT to the protecting OLT (par. [0093]).

### Summary

It is an objective to disclose a device and method for equalization delay adjustment after a protection switching event in a passive optical network that resolves one or more of the above identified shortcomings of existing solutions. More particularly, it is an objective to describe a technique for equalization delay adjustment after a protection switching event that does not rely on service-impacting calibration or re-activation prior to the protection switching event, that does not leave the backup OLT in a state where activation of new ONUs is temporarily impossible, that is less time consuming, scalable to multiple ONUs, involves no fiber spool and enables to achieve the required precision in the order or meters or nanoseconds.

Embodiments of the invention disclose an equalization delay adjustment device as defined by claim 1, able to adjust equalization delay of a plurality of optical network units that are coupled to a first optical line termination via respective protected optical fibers before a protection switching event and that are coupled to a second optical line termination via respective protecting optical fibers after the protection switching event, the equalization delay adjustment device comprising:
- a round trip time measurement unit being arranged to measure after the protection switching event a round trip time for each optical network unit in a subset of the plurality of optical network units over the respective protecting optical fibers;
- an equalization delay adjustment determination unit being arranged to determine for each optical network unit in the subset of optical network units a respective equalization delay adjustment value from a comparison of the equalization delay calculated from the round trip time measured after the protection switching event with the equalization delay applied by the optical network unit before the protection switching event, resulting in a subset of equalization delay adjustment values;
- an averaging unit being arranged to determine an average equalization delay adjustment value by averaging the subset of equalization delay adjustment values determined for the subset of optical network units; and
- an equalization delay configuration unit being arranged to configure the average equalization delay adjustment value in each optical network unit of the plurality of optical network units.

Thus, for a subset of ONUs the round trip time is measured after the switchover event, and for each ONU in the subset the equalization delay calculated from the measured round trip times is compared with the equalization delay applied by the ONU before the protection switchover. The change in equalization delay as a result of the protection switchover is averaged across the subset of ONUs and thereafter used to adjust the equalization delay of all ONUs. The method hence relies on the determination of an average equalization delay adjustment value and adjusts each ONU's equalization delay in accordance with this average equalization delay adjustment value after a Type-B protection switchover in a PON. The method leverages on the insight that in a Type-B protection switchover, the difference in fiber length between the active optical fiber path and the backup optical fiber path is due to the feeder section between OLT and optical splitter, which is common for all ONUs. Consequently, it is not necessary to exhaustively re-calibrate each ONU and recalculate the equalisation delay for each ONU after a protection switchover. The proposed method only requires information on the currently active ONUs, i.e. the change in their round trip times or equalization delays when switching from the active OLT to the backup OLT. Averaging this change across the ONUs that are active prior to the protection switching or a subset thereof enables to adjust the equalization delays of all ONUs, while allowing new ONUs to be activated on the backup OLT after the protection switchover event. The method is not restricted to multiple wavelength PONs, is accurate, fast and scalable to situations with numerous ONUs. The method deals with the fiber length difference at the point in time of the switchover. No upfront, service-affecting, provisioning or calibration is required. Immediately after the protection switchover, the backup OLT is ready to range new ONUs on the PON. It is further noticed that only a few selected ONUs, e.g. an arbitrary subset of the active ONUs coupled to the active OLT, may be processed without impact on the accuracy. Since the equalization delay difference is equal for all ONUs, there is no need to sequentially process each ONU in order to update its respective equalization delay.

Embodiments of the equalization delay adjustment device according to the present invention, as defined by claim 2, further comprise:
- a reset unit being arranged to set the equalization delay of each optical network unit of the subset of optical network units equal to zero before measuring the round trip time, and to set the equalization delay of each optical network unit of the subset of optical network units back to its previous value after measuring the round trip time.

Indeed, the equalization delay preferably is set zero before the round trip time is measured. Otherwise, the measured round trip time for an ONU will include the former equalization delay, applied by that ONU before the protection switchover, in which case this former equalization delay must be accounted in the calculation of the new equalization delay. The method relies on an adjustment of the equalization delay in its last step. Consequently, the former equalisation delay, applied by the ONU before the protection switchover, must be re-configured in the ONU before the adjustment takes place if the equalization delay was made zero for the round trip time measurement. An additional advantage of relying on an adjustment of the equalization delay is that the adjustment value is equal for all ONUs and therefore can be broadcasted. The ITU-T Standard Specification G. 9807.1, also known as XGS-PON, for instance provides a mechanism for broadcasting such equalization delay adjustment to all ONUs.

In embodiments of the equalization delay adjustment device according to the present invention, defined by claim 3, the round trip time measurement unit is arranged to:
- transmit a directed Physical Layer Operation and Maintenance grant message to an optical network unit followed by an upstream quiet window to measure the round trip time for the optical network unit.

Indeed, to enable measurement of the round trip time or RTT for an ONU coupled to the backup OLT via the protecting optical fibers after a protection switchover, the backup OLT may be controlled to send a ranging grant message to the ONU, i.e. a directed PLOAM grant message accompanied by an upstream quiet window.

In embodiments of the equalization delay adjustment device according to the present invention, defined by claim 4, the round trip time measurement unit is arranged to:
- repeatedly reset the equalization delay and transmit the directed Physical Layer Operation and Maintenance grant message to an optical network unit if no reply is received from said optical network unit within a given time interval.

Thus, if no reply is received from the ONU in response to the directed PLOAM grant message, resetting the equalization delay of that ONU to zero, and re-sending the directed PLOAM grant message followed by an upstream quiet window may be repeated until a reply is received and the RTT can be measured for that ONU, or until n retries have failed, n being a predefined positive integer number, or until a timer expires.

In embodiments of the equalization delay adjustment device according to the present invention, defined by claim 5, the averaging unit is arranged to iteratively remove outliers, i.e. equalization delay adjustment values that differ from the average equalization delay adjustment value by more than a given tolerance threshold, from the averaging.

Indeed, to improve the accuracy of the equalization delay adjustment after a protection switchover, outlying samples may be removed recursively from the measurement. Thereto, the equalisation delay adjustment values determined for the individual ONUs in the subset are compared to the average equalisation delay adjustment value. If the distance between these values exceeds a predefined tolerance value, the equalisation delay adjustment value determined for that ONU is removed from the subset of values and a new average equalisation delay adjustment value is calculated. This is repeated until all individual equalisation delay adjustment values determined for the ONUs lie within the tolerance threshold distance from the average equalisation delay adjustment value. It is noticed that in certain embodiments of the invention the tolerance threshold value may be decreased gradually in subsequent iterations wherein outliers are removed towards a desired tolerance value.

In embodiments of the equalization delay adjustment device according to the invention, defined by claim 6, the equalization delay configuration unit is arranged to transmit a broadcast ranging time physical layer operation and maintenance message comprising the average equalization delay adjustment value to each optical network unit of the plurality of optical network units.

Indeed, as mentioned above, the equalization delay adjustment device in the last step preferably broadcasts the average equalization delay adjustment value to all ONUs and therefore may use a Ranging_Time PLOAM message as defined in ITU-T Standard Specification G. 9807.1, also known as XGS-PON. This way, all ONUs can quickly and efficiently update the equalization delay and service interruption resulting from the protection switchover is further minimized.

In addition to an equalization delay adjustment device as defined by claim 1, the present invention also concerns a corresponding equalization delay adjustment method as defined by claim 7, to adjust equalization delay of a plurality of optical network units that are coupled to a first optical line termination via respective protected optical fibers before a protection switching event and that are coupled to a second optical line termination via respective protecting optical fibers after the protection switching event, the equalization delay adjustment method comprising:
- measuring after the protection switching event a round trip time for each optical network unit in a subset of the plurality of optical network units over the respective protecting optical fibers;
- determining for each optical network unit in the subset of optical network units a respective equalization delay adjustment value from a comparison of the equalization delay calculated from the round trip time measured after the protection switching event with the equalization delay applied by the optical network unit before the protection switching event, resulting in a subset of equalization delay adjustment values;
- averaging the subset of equalization delay adjustment values to thereby determine an average equalization delay adjustment value; and
- configuring the average equalization delay adjustment value in each optical network unit of the plurality of optical network units.

Further, embodiments of the invention entail a computer program product as defined by claim 8, comprising computer-executable instructions to cause the device of claim 1 to execute the steps of the method according to the invention.

Embodiments of the invention further concern a computer readable storage medium as defined by claim 9, comprising the computer program product according to the invention.

### Brief Description of the Drawings

Fig. 1 shows a passive optical network with protection switching;
Fig. 2 is a flow chart illustrating an embodiment of the equalization delay adjustment method according to the present invention;
Fig. 3 is a functional block scheme illustrating an embodiment of the equalization delay adjustment device according to the present invention; and
Fig. 4 illustrates a suitable computing system 400 for realizing methods and devices according to embodiments of the invention.

### Detailed Description of Embodiment(s)

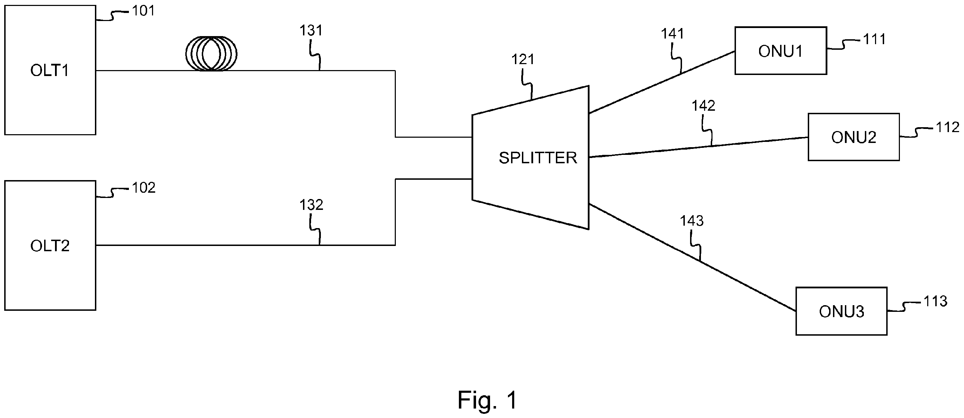

Fig. 1 shows a passive optical network or PON comprising a first optical line termination, OLT1 or 101, a second optical line termination, OLT2 or 102, a first optical network unit, ONU1 or 111, a second optical network unit, ONU2 or 112, a third optical network unit, ONU3 or 113, and an optical splitter 121 in between the optical line terminations 101, 102 and the optical network units 111, 112, 113. The first OLT 101 is coupled to the splitter 121 via a first feeder fiber 131. Similarly, the second OLT 102 is coupled to the splitter 121 via a second feeder fiber 132. The first feeder fiber 131 is supposed to have a length of 20 km whereas the second feeder fiber 132 is supposed to have a length of 5 km. The ONUs 111, 112 and 113 are coupled to the splitter 121 via respective optical fibers 141, 142 and 143. The OLTs 101 and 102 typically reside in the central office whereas the ONUs 111, 112, 113 reside in an optical endpoint, for instance at the customer premises. Consequently, the downstream direction is the direction from the OLTs 101, 102 to the ONUs 111, 112, 113, and the upstream direction is the direction from the ONUs 111, 112, 113 to the OLTs 101, 102.

In Fig. 1, a Type-B protection deployment is assumed. This means that one of the OLTs 101, 102 is active while the other OLT is standby. Consequently, also one of the feeder fibers 131, 132 is active while the other feeder fiber is standby. The active feeder fiber throughout this patent application also is named the protected fiber whereas the standby feeder fiber is named the protecting fiber. In case of a failure on the active path, e.g. the path from OLT 101 over feeder fiber 131, splitter 121, and respective fibers 141, 142, 143 to the ONUs 111, 112, 113, a protection switchover takes place as a result of which the backup path from OLT 102 over feeder fiber 132, splitter 121 and respective fibers 141, 142, 143 to the ONUs 111, 112, 113 becomes active. As a result of the protection switchover, OLT 102 takes over the downstream transmissions. The ONUs 111, 112, 113 as a consequence of the failure on the active path from OLT 101 loose downstream signal detection and enter the so called O6 state or Intermittent Loss-Of Downstream-Sync state or Intermittent LODS state in the ITU-T XGSPON, XGPON and NGPON2 standards. As soon as the ONUs 111, 112, 113 detect the downstream signal from the backup OLT 102, they return to the so called O5 state or Operation state wherein the ONUs receive and transmit data. The upstream bandwidth allocations to the ONUs 111, 112, 113 however are temporarily halted due to the unknown round trip time of the ONUs 111, 112, 113 on the new active path via OLT 102 and protecting feeder fiber 132.

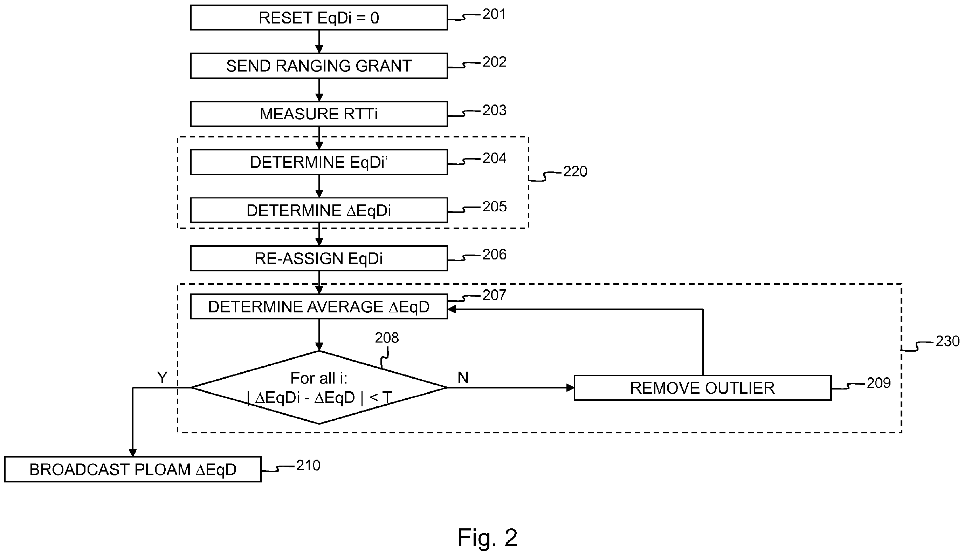

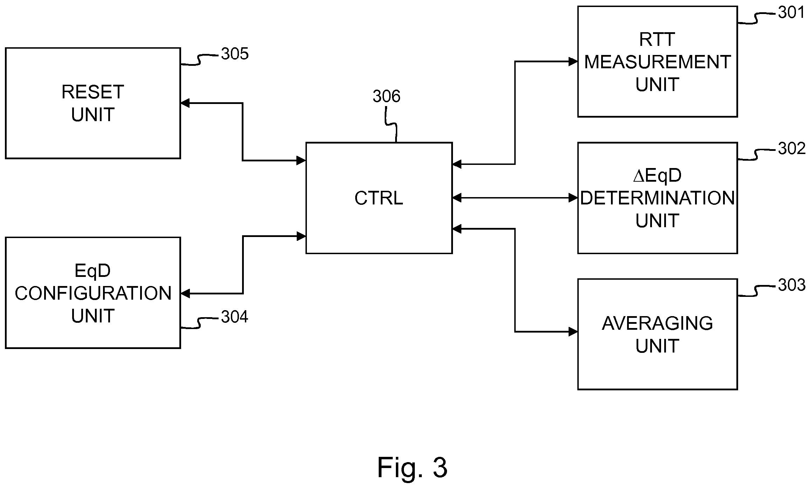

Fig. 2 shows the steps that will be executed to adjust the equalization delay applied by the ONUs 111, 112, 113 after the protection switchover from OLT 101 to OLT 102. Fig. 3 shows the components of a device executing the steps of Fig. 2 under control of controller 306.

First, a few ONUs are selected. The selection may be based on information of known ONUs on previously active OLT 101. In Fig. 1, it is assumed that OLT 101 was knowledgeable on the three ONUs 111, 112, 113, so these three ONUs will constitute the subset of selected ONUs involved in the method for equalization delay adjustment illustrated by Fig. 2.

In step 201, reset unit 305 upon instruction of control unit 306 sets the equalization delay EqDi equal to zero for each selected ONUᵢ, i representing an integer index for the selected ONUs. The equalization delay EqDi may for instance be set 0 by sending a unicast Ranging_Time PLOAM message with EqD = 0 to the ONUs 111, 112, 113. This step 201 is necessary to enable the RTT measurement unit 301 to measure the effective round trip time of each ONUᵢ. Omitting this step would imply that the measured round trip time over the backup path would include the former equalisation delay EqDi as a result of which this former equalisation delay would have to be subtracted or accounted for in later calculations.

In step 202, RTT measurement unit 301 upon instruction of controller 306 sends a directed ranging grant message to each selected ONUi followed by an upstream quiet window. The RTT measurement unit 301 listens for the reply of each ONUi. When a reply is received from ONUᵢ, the RTT measurement unit 301 in step 203 determines the round trip time RTTi of that ONUᵢ over the backup path. If no reply is received from an ONUᵢ within a predetermined time interval, the RTT measurement unit 301 re-sends the ranging grant message hence re-executing step 202 until a reply is received, or until a predetermined maximum number of attempts is reached, or until a certain time limit has lapsed.

Thereafter, in step 220, the equalisation delay adjustment determination unit 302 upon instruction of controller 306 determines the change in equalisation delay ΔEqDᵢ for each ONUᵢ as a result of the protection switch over from the active path via OLT1 to the backup path via OLT2. Thereto, the equalization delay adjustment determination unit 302 in a first sub-step 204 calculates the new equalization delay EqDᵢ' from the measured round trip times RTTᵢ, and in a second sub-step 205 calculates the difference ΔEqDᵢ between the new equalization delay EqDᵢ' as determined in step 204 and the former equalization delay EqDi, applied by ONUᵢ while coupled to the former active OLT 101.

In step 206, the reset unit 305 upon instruction of the control unit 306 reconfigures each ONUᵢ in the subset with its former equalisation delay EqDi. This step 206 is necessary since the method will broadcast in the last step 210 only the common equalisation delay adjustment ΔEqD. Without step 206, the method would result with a wrong equalisation delay being assigned to the probed ONUs, i.e. the ONUs in the subset.

In step 230, the averaging unit 303 upon instruction of the controller 306 calculates the average equalisation delay adjustment ΔEqD delta, i.e. the average equalisation delay adjustment across the selected ONUs. The averaging unit 303 thereto calculates in step 207 the average equalisation delay adjustment ΔEqD across all selected ONUs. Through iterative execution of steps 208, 209 and 207, the averaging unit 303 thereafter recursively removes outlying samples from the measurement. In step 208, the averaging unit 303 detect samples for which the distance of the equalisation delay adjustment value ΔEqDᵢ as determined in step 205 to the average equalisation delay adjustment value ΔEqD as calculated in step 207 is above a specified tolerance T. Such samples or ONUs are considered outliers and removed from the subset in step 209. In a new iteration of step 207, the averaging unit 303 re-calculates the average equalisation delay adjustment ΔEqD after removal of the outliers. The steps 208, 209 and 207 are iteratively executed until all maintained samples ΔEqDᵢ lie within a distance |ΔEqDᵢ| - ΔEqD| smaller than the specified tolerance T from the calculated average equalisation delay adjustment value ΔEqD. It is noticed that in between subsequent iterations of the steps 208, 209 and 207, the tolerance T may be decreased until a desired tolerance or accuracy is achieved.

In the last step 210, the equalisation delay configuration unit 304 upon instruction of the controller 306 adjust all ONU's respective equalisation delay by broadcasting the average equalisation delay adjustment value ΔEqD. Thus, not only the selected ONUs probed but also all other ONUs in the PON will be able to adjust their equalisation delay to deal with the protection switchover. The equalisation delay configuration unit 304 thereto may for instance broadcast a Ranging_Time PLOAM message containing the average equalisation delay adjustment value ΔEqD as determined in the last iteration of step 207.

Once the equalisation delays of the ONUs have been adjusted, the ONUs transmit upstream bursts taking into account their respective updated equalisation delay values EqDi' that are valid on the newly active OLT 102. The services of all ONUs are restored and normal operation on the PON is resumed, including the ranging and provisioning of new ONUs.

Fig. 4 shows a suitable computing system 400 according to an embodiment of the invention. Computing system 400 is suitable for implementing units 301, 302, 303, 304, 305 and 306 according to the above described embodiments. Computing system 400 may in general be formed as a suitable general purpose computer and comprise a bus 410, a processor 402, a local memory 404, one or more optional input interfaces 414, one or more optional output interfaces 416, a communication interface 412, a storage element interface 406 and one or more storage elements 408. Bus 410 may comprise one or more conductors that permit communication among the components of the computing system 400. Processor 402 may include any type of conventional processor or microprocessor that interprets and executes programming instructions. Local memory 404 may include a random access memory (RAM) or another type of dynamic storage device that stores information and instructions for execution by processor 402 and/or a read only memory (ROM) or another type of static storage device that stores static information and instructions for use by processor 402. Input interface 414 may comprise one or more conventional mechanisms that permit an operator to input information to the computing device 400, such as a keyboard 420, a mouse 430, a pen, voice recognition and/or biometric mechanisms, etc. Output interface 416 may comprise one or more conventional mechanisms that output information to the operator, such as a display 440, etc. Communication interface 412 may comprise any transceiver-like mechanism such as for example one or more Ethernet interfaces that enables computing system 400 to communicate with other devices and/or systems, for example with other computing devices 481, 482, 483. The communication interface 412 of computing system 400 may be connected to such another computing system by means of a local area network (LAN) or a wide area network (WAN) such as for example the internet. Storage element interface 406 may comprise a storage interface such as for example a Serial Advanced Technology Attachment (SATA) interface or a Small Computer System Interface (SCSI) for connecting bus 410 to one or more storage elements 408, such as one or more local disks, for example SATA disk drives, and control the reading and writing of data to and/or from these storage elements 408. Although the storage elements 408 above is described as a local disk, in general any other suitable computer-readable media such as a removable magnetic disk, optical storage media such as a CD or DVD, -ROM disk, solid state drives, flash memory cards, ... could be used. It is noticed that the entire method according to the present invention can be executed on the OLT becoming active. Computing system 400 could thus correspond to the processing system available in OLT 102. Computing system 400 however also can be an external machine in which case the OLT becoming active can be considered an I/O device used to communicate with the ONU to perform steps 201, 202, 203, 206 and 210 described here above.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. An equalization delay adjustment device able to adjust equalization delay of a plurality of optical network units that are coupled to a first optical line termination (101) via respective protected optical fibers (131; 141-143) before a protection switching event and that are coupled to a second optical line termination (102) via respective protecting optical fibers (132; 141-143) after said protection switching event, said equalization delay adjustment device comprising:
- a round trip time measurement unit (301) being arranged to measure after said protection switching event a round trip time RTTᵢ for each optical network unit (111, 112, 113) in a subset of said plurality of optical network units over said respective protecting optical fibers (132; 141-143);
- an equalization delay adjustment determination unit (302) being arranged to determine for each optical network unit (111, 112, 113) in said subset of optical network units a respective equalization delay adjustment value ΔEqDᵢ from a comparison of the equalization delay calculated from said round trip time RTTᵢ measured after said protection switching event with the equalization delay applied by said optical network unit (111, 112, 113) before said protection switching event, resulting in a subset of equalization delay adjustment values ΔEqDᵢ;
- an averaging unit (303) being arranged to determine an average equalization delay adjustment value ΔEqD by averaging said subset of equalization delay adjustment values ΔEqDᵢ determined for said subset of optical network units (111, 112, 113); and
- an equalization delay configuration unit (304) being arranged to configure said average equalization delay adjustment value ΔEqD in each optical network unit of said plurality of optical network units.

2. An equalization delay adjustment device according to claim 1, further comprising:
- a reset unit (305) being arranged to set the equalization delay EqDi of each optical network unit of said subset of optical network units (111, 112, 113) equal to zero before measuring said round trip time RTTᵢ, and to set the equalization delay EqDi of each optical network unit of said subset of optical network units (111, 112, 113) back to its previous value after measuring said round trip time RTTᵢ.

3. An equalization delay adjustment device according to claim 1, wherein said round trip time measurement unit (301) is arranged to:
- transmit a directed Physical Layer Operation and Maintenance grant message to an optical network unit (111, 112, 113) followed by an upstream quiet window to measure said round trip time RTTᵢ for said optical network unit (111, 112, 113).

4. An equalization delay adjustment device according to claim 2 and claim 3, wherein said round trip time measurement unit (301) is arranged to:
- repeatedly reset said equalization delay and transmit said directed Physical Layer Operation and Maintenance grant message to an optical network unit if no reply is received from said optical network unit within a given time interval.

5. An equalization delay adjustment device according to claim 1, wherein said averaging unit (303) is arranged to iteratively remove outliers, i.e. equalization delay adjustment values that differ from said average equalization delay adjustment value ΔEqD by more than a given tolerance threshold T, from said averaging.

6. An equalization delay adjustment device according to claim 1, wherein said equalization delay configuration unit (304) is arranged to transmit a broadcast ranging time physical layer operation and maintenance message comprising said average equalization delay adjustment value ΔEqD to each optical network unit of said plurality of optical network units.

7. An equalization delay adjustment method to adjust equalization delay of a plurality of optical network units that are coupled to a first optical line termination (101) via respective protected optical fibers (131; 141-143) before a protection switching event and that are coupled to a second optical line termination (102) via respective protecting optical fibers (132; 141-143) after said protection switching event, said equalization delay adjustment method comprising:
- measuring (203) after said protection switching event a round trip time RTTᵢ for each optical network unit (111, 112, 113) in a subset of said plurality of optical network units over said respective protecting optical fibers (132; 141-143);
- determining (220) for each optical network unit (111, 112, 113) in said subset of optical network units a respective equalization delay adjustment value ΔEqDᵢ from a comparison of the equalization delay calculated from said round trip time RTTᵢ measured after said protection switching event with the equalization delay applied by said optical network unit (111, 112, 113) before said protection switching event, resulting in a subset of equalization delay adjustment values ΔEqDᵢ;
- averaging (230) said subset of equalization delay adjustment values ΔEqDᵢ to thereby determine an average equalization delay adjustment value ΔEqD; and
- configuring (210) said average equalization delay adjustment value ΔEqD in each optical network unit of said plurality of optical network units.

8. A computer program product comprising computer-executable instructions to cause the device of claim 1 to execute the steps of the method according to claim 7.

9. A computer readable storage medium (404; 408) comprising the computer program product according to claim 8.

## Patentansprüche

1. Entzerrungsverzögerungseinstellungsvorrichtung, die in der Lage ist, Entzerrungsverzögerung einer Vielzahl von optischen Netzwerkeinheiten einzustellen, die vor einem Schutzschaltereignis über entsprechende geschützte optische Fasern (131; 141 bis 143) an einen ersten optischen Leitungsabschluss (101) gekoppelt sind und die nach dem Schutzschaltereignis über entsprechende schützende optische Fasern (132; 141 bis 143) an einen zweiten optischen Leitungsabschluss (102) gekoppelt sind, wobei die Entzerrungsverzögerungseinstellungsvorrichtung umfasst:
- eine Umlaufzeitmesseinheit (301), die dazu eingerichtet ist, nach dem Schutzschaltereignis eine Umlaufzeit RTTᵢ für jede optische Netzwerkeinheit (111, 112, 113) in einer Untermenge der Vielzahl von optischen Netzwerkeinheiten über die entsprechenden schützenden optischen Fasern (132; 141 bis 143) zu messen;
- eine Entzerrungsverzögerungseinstellungsbestimmungseinheit (302), die dazu eingerichtet ist, für jede optische Netzwerkeinheit (111, 112, 113) in der Untermenge von optischen Netzwerkeinheiten einen entsprechenden Entzerrungsverzögerungseinstellungswert ΔEqDᵢ von einem Vergleich der von der nach dem Schutzschaltereignis gemessenen Umlaufzeit RTTᵢ berechneten Entzerrungsverzögerung mit der durch die optische Netzwerkeinheit (111, 112, 113) vor dem Schutzschaltereignis angewandten Entzerrungsverzögerung zu bestimmen, was eine Untermenge von Entzerrungsverzögerungseinstellungswerten ΔEqDᵢ ergibt;
- eine Durchschnittsbildungseinheit (303), die dazu eingerichtet ist, einen durchschnittlichen Entzerrungsverzögerungseinstellungswert ΔEqD durch Bilden des Durchschnitts der Untermenge von Entzerrungsverzögerungseinstellungswerten ΔEqDᵢ zu bestimmen, die für die Untermenge von optischen Netzwerkeinheiten (111, 112, 113) bestimmt wurden; und
- eine Entzerrungsverzögerungskonfigurationseinheit (304), die dazu eingerichtet ist, den durchschnittlichen Entzerrungsverzögerungseinstellungswert ΔEqD in jeder optischen Netzwerkeinheit von der Vielzahl von optischen Netzwerkeinheiten zu konfigurieren.

2. Entzerrungsverzögerungseinstellungsvorrichtung nach Anspruch 1, die ferner umfasst:
- eine Rücksetzeinheit (305), die dazu eingerichtet ist, die Entzerrungsverzögerung EqDᵢ von jeder optischen Netzwerkeinheit von der Untermenge von optischen Netzwerkeinheiten (111, 112, 113) vor dem Messen der Umlaufzeit RTTᵢ auf gleich null zu setzen und die Entzerrungsverzögerung EqDᵢ von jeder optischen Netzwerkeinheit von der Untermenge von optischen Netzwerkeinheiten (111, 112, 113) nach dem Messen der Umlaufzeit RTTᵢ auf ihren vorherigen Wert zurückzusetzen.

3. Entzerrungsverzögerungseinstellungsvorrichtung nach Anspruch 1, wobei die Umlaufzeit-Messungseinheit (301) eingerichtet ist zum:
- Senden einer gerichteten Physical Layer Operation and Maintenance Erteilungsnachricht an eine optische Netzwerkeinheit (111, 112, 113), gefolgt von einem stillen Upstream-Fenster, zum Messen der Umlaufzeit RTTᵢ für die optische Netzwerkeinheit (111, 112, 113).

4. Entzerrungsverzögerungseinstellungsvorrichtung nach Anspruch 2 und Anspruch 3, wobei die Umlaufzeit-Messungseinheit (301) eingerichtet ist zum:
- wiederholten Zurücksetzen der Entzerrungsverzögerung und Senden der gerichteten Physical Layer Operation and Maintenance Erteilungsnachricht an eine optische Netzwerkeinheit, wenn innerhalb eines gegebenen Zeitintervalls keine Antwort von der optischen Netzwerkeinheit empfangen wird.

5. Entzerrungsverzögerungseinstellungsvorrichtung nach Anspruch 1, wobei die Durchschnittsbildungseinheit (303) dazu eingerichtet ist, Ausreißer, d. h. Entzerrungsverzögerungseinstellungswerte, die sich um mehr als ein gegebener Toleranzschwellenwert T von dem durchschnittlichen Entzerrungsverzögerungseinstellungswert ΔEqD unterscheiden, von der Durchschnittsbildung iterativ zu entfernen.

6. Entzerrungsverzögerungseinstellungsvorrichtung nach Anspruch 1, wobei die Entzerrungsverzögerungskonfigurationseinheit (304) dazu eingerichtet ist, eine rundgesendete Ranging Time Physical Layer Operation and Maintenance Nachricht, die den durchschnittlichen Entzerrungsverzögerungseinstellungswert ΔEqD umfasst, an jede optische Netzwerkeinheit von der Vielzahl von optischen Netzwerkeinheiten zu senden.

7. Entzerrungsverzögerungseinstellungsverfahren zum Einstellen der Entzerrungsverzögerung einer Vielzahl von optischen Netzwerkeinheiten, die vor einem Schutzschaltereignis über entsprechende geschützte optische Fasern (131; 141 bis 143) an einen ersten optischen Leitungsabschluss (101) gekoppelt sind und die nach dem Schutzschaltereignis über entsprechende schützende optische Fasern (132; 141 bis 143) an einen zweiten optischen Leitungsabschluss (102) gekoppelt sind, wobei das Entzerrungsverzögerungseinstellungsverfahren umfasst:
- Messen (203), nach dem Schutzschaltereignis, einer Umlaufzeit RTTᵢ für jede optische Netzwerkeinheit (111, 112, 113) in einer Untermenge von der Vielzahl von optischen Netzwerkeinheiten über die entsprechenden schützenden optischen Fasern (132; 141 bis 143);
- Bestimmen (220), für jede optische Netzwerkeinheit (111, 112, 113) in der Untermenge von optischen Netzwerkeinheiten, eines entsprechenden Entzerrungsverzögerungseinstellungswerts ΔEqDᵢ von einem Vergleich der von der nach dem Schutzschaltereignis gemessenen Umlaufzeit RTTᵢ berechneten Entzerrungsverzögerung mit der vor dem Schutzschaltereignis durch die optische Netzwerkeinheit (111, 112, 113) angewandten Entzerrungsverzögerung, was eine Untermenge von Entzerrungsverzögerungseinstellungswerten ΔEqDᵢ ergibt;
- Bilden (230) des Mittelwerts der Untermenge von Entzerrungsverzögerungseinstellungswerten ΔEqDᵢ, um dadurch einen durchschnittlichen Entzerrungsverzögerungseinstellungswert ΔEqD zu bestimmen; und
- Konfigurieren (210) des durchschnittlichen Entzerrungsverzögerungseinstellungswerts ΔEqD in jeder optischen Netzwerkeinheit von der Vielzahl von optischen Netzwerkeinheiten.

8. Computerprogrammprodukt, das computerausführbare Anweisungen umfasst, um zu bewirken, dass die Vorrichtung nach Anspruch 1 die Schritte des Verfahrens nach Anspruch 7 ausführt.

9. Maschinenlesbarer Datenträger (404; 408), der das Computerprogrammprodukt nach Anspruch 8 umfasst.

## Revendications

1. Dispositif d'ajustement de retard d'égalisation capable d'ajuster le retard d'égalisation d'une pluralité d'unités de réseau optique qui sont couplées à une première terminaison de ligne optique (101) via des fibres optiques protégées respectives (131 ; 141-143) avant un événement de commutation de protection et qui sont couplées à une seconde terminaison de ligne optique (102) via des fibres optiques de protection respectives (132 ; 141-143) après ledit événement de commutation de protection, ledit dispositif d'ajustement de retard d'égalisation comprenant :
- une unité de mesure de temps aller-retour (301) qui est agencée pour mesurer après ledit événement de commutation de protection un temps aller-retour RTTᵢ pour chaque unité de réseau optique (111, 112, 113) dans un sous-ensemble de ladite pluralité d'unités de réseau optique sur lesdites fibres optiques de protection respectives (132 ; 141 -143) ;
- une unité de détermination d'ajustement de retard d'égalisation (302) qui est agencée pour déterminer pour chaque unité de réseau optique (111, 112, 113) dans ledit sous-ensemble d'unités de réseau optique une valeur d'ajustement de retard d'égalisation respective ΔEqDᵢ à partir d'une comparaison du retard d'égalisation calculé à partir du dudit temps aller-retour RTTᵢ mesuré après ledit événement de commutation de protection avec le retard d'égalisation appliqué par ladite unité de réseau optique (111, 112, 113) avant ledit événement de commutation de protection, ayant pour résultat un sous-ensemble de valeurs d'ajustement de retard d'égalisation ΔEqDᵢ ;
- une unité de moyennage (303) qui est agencée pour déterminer une valeur d'ajustement de retard d'égalisation moyenne ΔEqD en moyennant ledit sous-ensemble de valeurs d'ajustement de retard d'égalisation ΔEqDᵢ déterminé pour ledit sous-ensemble d'unités de réseau optique (111, 112, 113) ; et
- une unité de configuration de retard d'égalisation (304) qui est agencée pour configurer ladite valeur d'ajustement de retard d'égalisation moyenne ΔEqD dans chaque unité de réseau optique de ladite pluralité d'unités de réseau optique.

2. Dispositif d'ajustement de retard d'égalisation selon la revendication 1, comprenant en outre :
- une unité de réinitialisation (305) qui est agencée pour régler le retard d'égalisation EqDᵢ de chaque unité de réseau optique dudit sous-ensemble d'unités de réseau optique (111, 112, 113) égal à zéro avant la mesure dudit temps aller-retour RTTᵢ, et pour rerégler le retard d'égalisation EqDᵢ de chaque unité de réseau optique dudit sous-ensemble d'unités de réseau optique (111, 112, 113) à sa valeur précédente après la mesure dudit temps aller-retour RTTᵢ.

3. Dispositif d'ajustement de retard d'égalisation selon la revendication 1, dans lequel ladite unité de mesure de temps aller-retour (301) est agencée pour :
- transmettre un message d'octroi d'exploitation et de maintenance de couche physique dirigé à une unité de réseau optique (111, 112, 113) suivi d'une fenêtre silencieuse en amont pour mesurer ledit temps aller-retour RTTᵢ pour ladite unité de réseau optique (111, 112, 113).

4. Dispositif d'ajustement de retard d'égalisation selon la revendication 2 et la revendication 3, dans lequel ladite unité de mesure de temps aller-retour (301) est agencée pour :
- réinitialiser de manière répétée ledit retard d'égalisation et transmettre ledit message d'octroi d'exploitation et de maintenance de couche physique dirigé à une unité de réseau optique si aucune réponse n'est reçue en provenance de ladite unité de réseau optique dans un intervalle de temps donné.

5. Dispositif d'ajustement de retard d'égalisation selon la revendication 1, dans lequel ladite unité de moyennage (303) est agencée pour éliminer de manière itérative des valeurs aberrantes, c'est-à-dire des valeurs d'ajustement de retard d'égalisation qui diffèrent de ladite valeur d'ajustement de retard d'égalisation moyenne ΔEqD de plus d'un seuil de tolérance donné T, à partir dudit moyennage.

6. Dispositif d'ajustement de retard d'égalisation selon la revendication 1, dans lequel ladite unité de configuration de retard d'égalisation (304) est agencée pour transmettre un message d'exploitation et de maintenance de couche physique de temps de télémétrie de diffusion comprenant ladite valeur d'ajustement de retard d'égalisation moyenne ΔEqD à chaque unité de réseau optique de ladite pluralité d'unités de réseau optique.

7. Procédé d'ajustement de retard d'égalisation pour ajuster le retard d'égalisation d'une pluralité d'unités de réseau optique qui sont couplées à une première terminaison de ligne optique (101) via des fibres optiques protégées respectives (131 ; 141-143) avant un événement de commutation de protection et qui sont couplées à une seconde terminaison de ligne optique (102) via des fibres optiques de protection respectives (132 ; 141-143) après ledit événement de commutation de protection, ledit procédé d'ajustement de retard d'égalisation comprenant :
- la mesure (203) après ledit événement de commutation de protection d'un temps aller-retour RTTᵢ pour chaque unité de réseau optique (111, 112, 113) dans un sous-ensemble de ladite pluralité d'unités de réseau optique sur lesdites fibres optiques de protection respectives (132 ; 141-143) ;
- la détermination (220) pour chaque unité de réseau optique (111, 112, 113) dans ledit sous-ensemble d'unités de réseau optique d'une valeur d'ajustement de retard d'égalisation respective ΔEqDᵢ à partir d'une comparaison du retard d'égalisation calculé à partir dudit temps aller-retour RTTᵢ mesuré après ledit événement de commutation de protection avec le retard d'égalisation appliqué par ladite unité de réseau optique (111, 112, 113) avant ledit événement de commutation de protection, ayant pour résultat un sous-ensemble de valeurs d'ajustement de retard d'égalisation ΔEqDᵢ ;
- le moyennage (230) dudit sous-ensemble de valeurs d'ajustement de retard d'égalisation ΔEqDᵢ pour ainsi déterminer une valeur d'ajustement de retard d'égalisation moyenne ΔEqD ; et
- la configuration (210) de ladite valeur d'ajustement de retard d'égalisation moyenne ΔEqD dans chaque unité de réseau optique de ladite pluralité d'unités de réseau optique.

8. Produit de programme informatique comprenant des instructions exécutables par ordinateur pour amener le dispositif de la revendication 1 à exécuter les étapes du procédé selon la revendication 7.

9. Support de stockage lisible par ordinateur (404 ; 408) comprenant le produit de programme informatique selon la revendication 8.
